# EUROPÄISCHE PATENTSCHRIFT

(11) **EP 2 497 141 B1**
(45) Veröffentlichungstag und Bekanntmachung des Hinweises auf die Patenterteilung: **09.01.2019**
(21) Anmeldenummer: 10776586.9
(22) Anmeldetag: 03.11.2010
(51) Int. Cl.: H01M 4/92, H01M 4/88

(54) **VERFAHREN ZUR ERZEUGUNG EINER KATALYSATORHALTIGEN ELEKTRODENSCHICHT**
METHOD FOR GENERATING A CATALYST-CONTAINING ELECTRODE LAYER
PROCÉDÉ DE PRODUCTION D'UNE COUCHE D'ÉLECTRODE CONTENANT UN CATALYSEUR

(30) Priorität: 03.11.2009 DE 102009051798
(43) Veröffentlichungstag der Anmeldung: 12.09.2012
(73) Patentinhaber: Carl Freudenberg KG, 69469 Weinheim (DE)
(72) Erfinder: BATZER, Martin, D-81737 München (DE)
(74) Vertreter: Grättinger Möhring von Poschinger Patentanwälte Partnerschaft
(86) Internationale Anmeldenummer: PCT/EP2010/006696
(87) Internationale Veröffentlichungsnummer: WO 2011/054500

(56) Entgegenhaltungen:
- DE-A1- 19 837 669
- DE-A1- 19 958 959
- JP-A- 60 133 662
- US-A1- 2002 015 878

## Beschreibung

Die vorliegende Erfindung betrifft ein Verfahren zur Erzeugung einer katalysatorhaltigen Elektrodenschicht auf einem Substrat, insbesondere einer Katalysatorschicht für Brennstoffzellen oder sonstige chemische oder elektrochemische Reaktoren.

Solche katalysatorhaltigen Elektrodenschichten bzw. Katalysatorschichten stellen einen wesentlichen Bestandteil einer sogenannten Membran-Elektroden-Einheit aller Arten von Brennstoffzellen dar, werden jedoch auch z.B. in Elektrolyseuren, Reformatoren oder ganz allgemein in sonstigen chemischen oder elektrochemischen Reaktoren benötigt. So besteht z.B. die Membran-Elektroden-Einheit einer Brennstoffzelle aus einer sandwichartigen Struktur aus einer ersten, die Kathode bildenden Elektrodenschicht, einer Membran und darauffolgend nochmals einer zweiten, die Anode bildenden Elektrodenschicht. Beidseits der Membran-Elektroden-Einheit einer Brennstoffzelle sind dann jeweils eine sogenannte Gasdiffusionsschicht angeordnet, durch welche der Membran-Elektroden-Einheit im Betrieb der Brennstoffzelle die hierfür notwendigen Brennstoffe (z.B. Methanol oder Wasserstoff) zugeführt und die bei der elektrochemischen Brennstoffwandlung entstehenden Produkte wieder abgeführt werden können. Dabei ist im Bereich der Elektroden die Anwesenheit und möglichst optimale Verteilung eines die Brennstoffwandlung fördernden Katalysators erforderlich. Für Anode und Kathode gelten insoweit verschiedene Anforderungen, weshalb bei den betreffenden Elektrodenschichten verschiedene Katalysatoren zur Anwendung kommen können.

In einem ersten vorbekannten Herstellungsverfahren für katalysatorhaltige Elektrodenschichten wird auf die Verwendung sogenannter geträgerter Katalysatorpartikel zurückgegriffen, die einer zur Herstellung der Elektrodenschicht verwendeten Paste mit weiteren Bestandteilen beigemengt werden. Die geträgerten Katalysatorpartikel wurden dabei häufig durch als Trägerpartikel fungierende Kohlenstoffpartikel gebildet, auf denen zumindest teilweise Katalysatormaterial - z.B. mittels eines chemischen Abscheidungsprozesses - abgeschieden wurde. Hierfür wird zunächst eine Lösung aus den Trägerpartikeln und einem Katalysatorprecursor hergestellt. Anschließend wird der Katalysatorprecursor auf geeignete Weise zersetzt, wodurch das frei werdende Katalysatormaterial schließlich auf die Trägerpartikel abgeschieden wird. Die Verwendung eines solchermaßen synthetisierten geträgerten Katalysators in einer zur Erzeugung einer Elektrodenschicht verwendeten Paste ist jedoch mit Nachteilen verbunden. Insbesondere befindet sich der abgeschiedene Katalysator bei einer aus einer entsprechenden Paste hergestellten Elektrodenschicht nicht nur an denjenigen Stellen innerhalb der Elektrodenschicht, an welchen tatsächlich eine Katalysatoranwesenheit notwendig ist, was letztlich in einer sehr hohen und ineffizienten - und damit unwirtschaftlichen - Beladung der Elektrodenschicht mit teils nicht nutzbarem Katalysatormaterial verbunden ist. Dieser Nachteil kommt bei vergleichsweise großflächigen Elektrodenschichten in besonderem Maße zur Geltung.

Da jedoch prinzipiell die Verwendung eines geträgerten Katalysators von Vorteil ist, z.B. aufgrund der möglichen Bereitstellung einer sehr hohen aktiven Fläche für den Katalysator, wurden mit dem weiteren Fortschritt der Entwicklung andere Wege zur Erzeugung katalysatorhaltiger Elektrodenschichten bzw. Katalysatorschichten beschritten, die teils noch heute zum Stand der Technik zählen.

Hierzu zählt das z.B. in der US 5,084,144, der DE 19720688 C1, der EP 1307939 B1 oder der EP 1391001 B1 in verschiedenen Varianten beschriebene Verfahren der elektrochemischen Abscheidung. Gemäß den Verfahren aus den beiden zuletzt zitierten Europäischen Patentschriften wird zunächst eine das Katalysatormaterial in Form eines Katalysatorprecursors (z.B. ein den Katalysator enthaltendes Salz) beinhaltende Precursorschicht auf einer Membran bereitgestellt und darin anschließend der Katalysator auf elektro-chemischen Wege, d.h. unter externer Bereitstellung eines elektrischen Stroms, einer elektrischen Spannung bzw. eines elektrischen Feldes, abgeschieden. Hierdurch kann die benötigte Menge des verwendeten und zumeist sehr teuren Katalysators deutlich reduziert werden, da der elektrochemische Abscheidevorgang vorteilhaft nur im Bereich der sogenannten Drei-Phasen-Grenze stattfindet, an welcher neben einem Kontakt zu den der Brennstoffzelle zugeführten Prozessmedien auch eine elektronische und ionische Leitfähigkeit vorhanden ist - was für die Effizienz der Brennstoffwandlung im Betrieb einer Brennstoffzelle oder eines sonstigen chemischen bzw. elektrochemischen Reaktors optimal ist. Nachteilig ist jedoch insoweit der hohe apparative Aufwand, bei dem insbesondere in einer geeigneten Probenkammer eine elektrische Kontaktierung der herzustellenden Schichten erfolgen muss. Ferner muss die Membran während des elektro-chemischen Abscheideprozesses auf geeignete Weise (z.B. mittels Wasser oder Wasserdampf) feucht gehalten werden, um in dieser ein für den Abscheidevorgang notwendiges Maß an elektrischer Leitfähigkeit aufrecht zu erhalten.

Eine ebenfalls bereits vorbekannte Weiterbildung dieses Verfahrens ist in der WO 2008/104322 A2 beschrieben. Bei diesem Verfahren wird zunächst eine strukturierte Elektrodenschicht erzeugt und anschließend - wiederum elektrochemisch - der Katalysator auf in der strukturierten Schicht vorhandenen Kohlenstoffpartikeln, die als Träger für den Katalysator fungieren, abgeschieden. Auch insoweit ist jedoch während des elektrochemischen Abscheidevorgangs eine geeignete Leitfähigkeit der Membran sicherzustellen sowie die Bereitstellung einer externen elektrischen Spannung, eines externen elektrischen Stroms bzw. eines durch geeignete Mittel erzeugten elektrischen Feldes zwingende Voraussetzung zur Durchführung des beschriebenen Verfahrens.

Weitere vorbekannte Verfahren zur Herstellung katalysatorhaltiger Elektrodenschichten sind aus der wissenschaftlichen Literatur bekannt. So beschreiben z.B. Qiao et al. in dem Artikel "Evaluation of a passive microtubular direct methanol fuel cell with PtRu anode catalyst layers made by wet-chemical processes" (Journal of the electrochemical society, 2006, Vol. 153, pp. A42-A47) ein Verfahren zur Herstellung einer Anoden-Katalysatorschicht über Imprägnierung der Membran und anschließende chemische Reduktion eines in die Membran imprägnierten Katalysatorprecursors. Dabei werden jedoch letztlich ungeträgerte Katalysatoren auf und innerhalb der Membran hergestellt, was sich im Hinblick auf das Verhältnis von aktiver Oberfläche zu Katalysatorbedarf und im Hinblick auf die Zugänglichkeit des abgeschiedenen Katalysators für die Prozessmedien als nachteilig erweist.

Ein weiteres vorbekanntes Verfahren zur Katalysator-Synthese ist unter dem Begriff "Impregnation-Method" oder "Method of impregnation" bekannt, bei dem ein Katalysatorträger, meist geeignete Industrieruße, mit einer wässrigen, einen Katalysatorprecursor enthaltenden Lösung vermischt wird, so dass sich die Oberfläche der Katalysatorträger mit dem Katalysatorprecursor belegen kann. Anschließend wird die verarmte Lösung entweder abfiltriert oder abgedampft, und anschließend der geträgerte Katalysator durch chemische Reduktion erzeugt. Auch hier wird somit lediglich ein geträgerter Katalysator erzeugt, der - wie dies bereits eingangs erwähnt wurde - einer geeigneten Elektrodenschichtpaste beizumengen ist. Auch dies resultiert in einer unwirtschaftlichen Verteilung des Katalysators innerhalb der gesamten Elektrodenschicht.

Ferner offenbart die DE 10 2007 033 753 A1 ein Verfahren, bei dem eine Katalysatorbeschichtung einer Gasdiffusionselektrode derart erfolgt, dass eine wässrige Precursorlösung auf ein leitfähiges, ultrahydrophobes Substrat aufgebracht und anschließend der Katalysator chemisch oder bevorzugt elektro-chemisch abgeschieden wird. Dabei findet ersichtlich nur eine oberflächliche Abscheidung des Katalysators statt. Damit ergibt sich zwar ein vergleichsweise geringer Platinverbrauch, allerdings lässt sich mit einer solchermaßen hergestellten Gasdiffusionselektrode in einer Membran-Elektroden-Einheit insgesamt nur eine geringe katalytische Aktivität bzw. Leistung erzielen.

Und schließlich zeigt die DE 100 47 935 A1 eine Elektrode für eine Brennstoffzelle umfassend eine Polymerfeststoffelektrolyt-Katalysatorverbundelektrode, die ein Kationenaustauschharz, Kohlenstoffteilchen und Katalysatormetall enthält, bei der das Katalysatormetall hauptsächlich auf einen Ort geladen wird, an dem eine Oberfläche der Kohlenstoffteilchen mit einem Protonen leitenden Kanal im Harz in Kontakt kommt. Hierzu muss die zunächst erzeugte Elektrodenschicht für einen außerordentlich langen Zeitraum von 2 Tagen in einer den Katalysator (z.B. Platin) beinhaltenden Lösung gewässert werden, damit der für die gezielte Ablagerung des Katalysator erforderliche Ionenaustauschprozess, der auf langen Zeitskalen abläuft, stattfinden kann. Dies führt dazu, dass zwar einerseits im erwünschten Sinne Katalysator- bzw. Metallpartikel an den Enden von Ionenaustauschkanälen abgelagert werden. Andererseits erfolgt dabei jedoch auch eine Anhaftung von Katalysator bzw. Katalysatorverbindungen im Inneren der Protonen leitenden Kanäle des Kationenaustauschharzes (also an Stellen an denen der Katalysator inaktiv ist und/oder an Stellen die im späteren Betrieb einer Brennstoffzelle den Medienkontakt zu im selben Protonenleitenden Kanal befindlichen Katalysatorpartikeln blockieren bzw. behindern), weshalb die Elektrode nach der langwierigen Wässerung mit der Precursorlösung in einem gründlichen Waschschritt, z.B. mit deionisiertem Wasser, gewaschen werden muss, wodurch ein nicht unerheblicher Teil des Katalysators wieder aus der Schicht ausgetragen wird.

Vor diesem Hintergrund ist es die Aufgabe der vorliegenden Erfindung, ein neues Verfahren zur Erzeugung einer katalysatorhaltigen Elektrodenschicht auf einem Substrat, insbesondere einer Katalysatorschicht für Brennstoffzellen oder sonstige chemische oder elektrochemische Reaktoren bereitzustellen, welches bei gleichzeitig guter Katalysatorausnutzung und verteilung kostengünstig und schnell durchführbar ist, sowie weitere nachstehend noch näher erläuterte Vorteile aufweist.

Diese Erfindung wird mit einem Verfahren nach Patentanspruch 1 gelöst. Im Rahmen der vorliegenden Erfindung wurde überraschenderweise herausgefunden, dass auch ohne Durchführung eines elektrochemischen Abscheidevorgangs und des damit verbundenen apparativen Aufwands eine effiziente und gleichzeitig kostengünstige Abscheidung des Katalysators auf den in einer Elektrodenschicht vorhandenen Trägerpartikeln unter gleichermaßen niedrigem Katalysatoreinsatz möglich ist. Die mit dem erfindungsgemäßen Verfahren erzeugten Katalysatorschichten weisen insbesondere hinsichtlich der gegebenen Katalysatorausnutzung, der Verteilung des Katalysators in der erzeugten Katalysatorschicht auf den Trägerpartikeln sowie der erzielbaren katalytischen Aktivität im späteren Betrieb einer Brennstoffzelle (bzw. eines sonstigen chemischen oder elektrochemischen Reaktors) zumindest vergleichbare Eigenschaften auf, wie sie bei der Erzeugung entsprechender Schichten mittels der deutlich aufwendigeren elektro-chemischen Abscheidung herstellbar sind.

Ein erster wesentlicher Aspekt hierfür ist, dass die Abscheidung des Katalysators innerhalb der zuvor bzw. gleichzeitig erzeugten Elektrodenschicht im wesentlichen nur an denjenigen Stellen erfolgt, die im späterem Betrieb einer Brennstoffzelle (oder eines sonstigen chemischen oder elektro-chemischen Reaktors) für die Prozessmedien zugänglich sind. Die nicht nur oberflächlich auf der Elektrodenschicht erfolgende Abscheidung des Katalysators gewährleistet, dass auch tiefere Schichten der Elektrode katalytisch aktiv sind, womit sich z.B. im Vergleich zu dem aus der DE 10 2007 033 753 A1 bekannten Stand der Technik deutlich leistungsfähigere Membran-Elektroden-Einheiten erzielen lassen.

Durch die im Rahmen der vorliegenden Erfindung realisierte Integration eines - nicht elektro-chemisch erfolgenden - Abscheidevorgangs des Katalysators (z.B. durch chemische und/oder thermische Reduktion eines Katalysatorprecursors) in den Fertigungsprozess des Endprodukts (beispielsweise der Herstellung einer Membran-Elektroden-Einheit für eine Brennstoffzelle) werden jedoch noch weitere Vorteile erzielt. So besteht insbesondere ein verringertes Sicherheitsrisiko über den gesamten Herstellungsvorgang, da der reaktive Katalysator erst während eines sehr spät erfolgenden Verfahrensschrittes, nämlich mit oder nach Erzeugung der Elektrodenschicht, eingebracht wird. Ferner kann bei dem erfindungsgemäßen Verfahren eine (beinahe) vollständige Umsetzung des Katalysators erfolgen und etwaige im Stand der Technik in nachteiliger Weise erforderliche Waschschritte, bei denen in nachteiliger Art mit einem Katalysatoraustrag aus der Schicht zu rechnen ist, entfallen vollständig.

Schließlich sei noch klarstellend erwähnt, dass der gewählte Begriff einer Zersetzung des Katalysatorprecursors insbesondere eine chemisch oder thermisch induzierte Reduktion des Katalysatorprecursors umfasst, jedoch nicht hierauf beschränkt ist. Insbesondere soll damit z.B. in Zusammenhang mit einer Platinabscheidung, wie sie auf der die Kathode bildenden Elektrodenschicht für eine Brennstoffzelle häufig vorgesehen ist, auch die mögliche Verwendung eines Pt(0)-Precursors und der insoweit von statten gehende Zersetzungsprozess abgedeckt sein.

Eine erste vorteilhafte Ausführungsvariante des erfindungsgemäßen Verfahrens sieht vor, dass die Elektrodenschicht aus einer die Trägerpartikel beinhaltenden Elektrodenschichtpaste hergestellt wird, der bereits der Katalysatorprecursor beigemengt ist. Diese Erfindungsvariante erweist sich insbesondere aus prozesstechnischer Sicht als besonders vorteilhaft, da hier die - nicht elektrochemisch - erfolgende Abscheidung des Katalysators gleichzeitig mit der Erzeugung der Elektrodenschicht gemäß Schritt (A) erfolgen kann, z.B. während eines im Rahmen der Erzeugung der Elektrodenschicht möglicherweise erfolgenden Trocknungs- und/oder Temperungsschritt für die aus der Elektrodenschichtpaste hergestellte Elektrodenschicht, womit ein schneller Verfahrensablauf gewährleistet ist. Während eines solchen Trocknungs- und/oder Temperungsschrittes können dann z.B. auch gleichzeitig die weiter unten noch näher erläuterten Verfahrensschritte der Beaufschlagung der Elektrodenschicht mit einem flüssigen und/oder gasförmigen Reduktionsmittel und/oder einer erhöhten Temperatur erfolgen. Bevorzugt wird dabei dafür Sorge getragen, dass zwischen der Beimengung des Katalysatorprecursors zur Elektrodenschichtpaste und dem Beginn des sich hieran anschließenden Abscheidevorgangs ein Zeitraum von nicht mehr als ca. 20 Minuten vergeht.

Demgegenüber kann in einer zweiten - alternativen - Ausführungsvariante des erfindungsgemäßen Verfahrens vorgesehen sein, dass die Elektrodenschicht erst nach ihrer Erzeugung gemäß Schritt (A) mit einer den Katalysatorprecursor enthaltenden Lösung imprägniert wird, was wiederum andere Vorteile mit sich bringt. Diesbezüglich ist zunächst zu erwähnen, dass die katalysatorprecursorhaltige Lösung - infolge der erst nach Erzeugung der Elektrodenschicht erfolgenden Imprägnierung - ausschließlich in diejenigen Bereiche der bereits in einem vorhergehenden Schritt erzeugten Elektrodenschicht vordringen kann, in welche später auch die Prozessmedien einer Brennstoffzelle (oder eines sonstigen chemischen oder elektro-chemischen Reaktors) vordringen können, womit der Katalysator nur an insoweit sinnvollen Stellen abgeschieden wird, was dessen nutzbare Ausbeute erhöht. Ferner entsteht durch die erst später erfolgende Imprägnierung der Elektrodenschicht mit der den Katalysatorprecursor beinhaltenden Lösung ein höheres Maß an Flexibilität im Hinblick auf die Zusammensetzung einer die Elektrodenschicht ausbildenden Paste, in der somit auch für den Katalysator ggfs. schädliche Substanzen verwendet werden können (z.B. Lösungsmittel), jedenfalls sofern sich diese bis zum Abschluss der Erzeugung der Elektrodenschicht verflüchtigen, womit diese insoweit nach Erzeugung der Schicht keine Gefahr mehr für den erst dann in der Schicht abzuscheidenden Katalysator darstellen. Ebenso kann die Elektrodenschicht bei erst später erfolgender Imprägnierung zuvor, z.B. durch hohe Temperaturbeaufschlagung, in einer Art und Weise behandelt werden, die unter Anwesenheit des Katalysators bzw. eines Katalysatorprecursors nachteilig oder erst gar nicht möglich wäre. Auch das Handling und die Lagerung von auf Vorrat hergestellten Elektrodenschichten erleichtert sich in Abwesenheit eines Katalysators oder Katalysatorprecursors maßgeblich.

Der erfindungsgemäße Verzicht auf einen Waschschritt, welcher einen Austrag des Katalysators (bzw. des Katalysatorprecursors) aus der Schicht bewirken könnte, kann vorliegend insbesondere deshalb erfolgen, da die Imprägnierung der Elektrodenschicht mit einer den Katalysatorprecursor enthaltenden Lösung vorliegend bevorzugt auf - im Vergleich zum Stand der Technik - sehr kurzen Zeitskalen erfolgen kann. Das eigentliche Imprägnieren der Elektrodenschicht mit der den Katalysatorprecursor enthaltenden Lösung, welches z.B. durch Auftropfen oder Aufsprühen der Lösung erfolgt, soll dabei vorteilhaft nur über einen Zeitraum zwischen 1 Sekunde und 10 Minuten, nochmals vorteilhaft über einen Zeitraum zwischen 0,5 und 5 Minuten erfolgen.

Die anschließende Abscheidung des Katalysators im erfindungsgemäßen Sinne (Verfahrensschritt B) kann dann bevorzugt unmittelbar nach dem Imprägnieren der Elektrodenschicht mit der den Katalysatorprecursor beinhaltenden Lösung beginnen, wobei zwischen dem Ende der Imprägnierung und dem Beginn der Abscheidung vorteilhaft nicht mehr als 20 Minuten, nochmals bevorzugt nur 0 - 5 Minuten vergehen sollten und wobei dazwischen kein Waschschritt erfolgt.

Da der Imprägnierungsschritt somit vorteilhaft nur über einen vergleichsweise kurzen Zeitraum stattfindet, kann eine unerwünschte Ablagerung des Katalysatorprecursor in ionenleitenden Kanälen eines in einer Elektrodenschicht vorhandenen Kationenaustauschharzes (z.B. einer Nafionlösung) weitgehend vermieden werden, da sich die hierfür erforderlichen Ionenaustauschprozesse auf deutlich längeren Zeitskalen abspielen. Eine hauptsächliche Ablagerung des Katalysators in solchen Kanälen, wie sie z.B. nach der DE 100 47 935 A1 vorgesehen ist, findet also vorliegend gerade nicht statt.

Grundsätzlich kann im Rahmen der vorliegenden Erfindung mit einer erst nachträglichen Imprägnierung der Elektrodenschicht mit dem Katalysatorprecursor - auch bei den vorstehend genannten kurzen Imprägnierungszeiten - eine vollständige Durchdringung der Elektrodenschicht mit dem Katalysatorprecursor erfolgen, was zwar - insbesondere bei vergleichsweise dünnen Elektrodenschichten mit Schichtdicken von mehreren 10*µ*m - vorteilhaft sein kann, jedoch nicht zwingend erforderlich sein muss. Vorteilhaft wird die Imprägnierung so gesteuert, dass der Katalysatorprecursor bis zu einer Eindringtiefe von wenigstens 2*µ*m - 100*µ*m, vorteilhaft von 10 - 50*µ*m in die Elektrodenschicht vordringt, da auch solch tiefe Schichten der Elektrode katalytisch aktiv sind. Eine hinreichende Eindringtiefe kann im Rahmen der vorliegenden Erfindung unabhängig davon erzielt werden, ob die Elektrodenschicht durch entsprechende Auswahl und/oder Behandlung ihrer Bestandteile hydrophil oder hydrophob ist. Selbst eine ultrahydrophobe Elektrodenschicht kann bei Wahl eines geeigneten Lösungsmittels für die katalysatorprecursorhaltige Lösung Verwendung finden.

Und schließlich kann die Einbringung bzw. Imprägnierung des Katalysatorprecursors in die Elektrodenschicht zielgerichtet gesteuert werden, z.B. indem - was einer nochmals bevorzugten Weiterbildung der vorgenannten Verfahrensvariante entspricht - die Elektrodenschicht mit der den Katalysatorprecursor enthaltenden Lösung gezielt inhomogen imprägniert wird. Diese Inhomogenität betrifft zum einen eine gezielte Steuerung der auf die Elektrodenschicht pro Flächeneinheit aufgebrachten Menge an katalysatorprecursorhaltiger Lösung, wodurch ein spezifisch einstellbarer Platinkonzentrationsgradient über die Fläche und ggfs. auch die senkrecht hierzu verlaufende Eindringtiefe der Elektrode erzeugt werden kann, ggfs. unter zusätzlicher Anwendung von geeigneten Trocknungsschritten, die die inhomogene Verteilung des Katalysators befördern können.

Zu beiden vorgenannten Varianten des erfindungsgemäßen Verfahrens sieht eine abermals bevorzugte Weiterbildung der Erfindung vor, dass das Abscheiden des Katalysators gemäß Schritt (B) thermisch und/oder durch ein in Kontakt mit der Elektrodenschicht stehendes Reduktionsmittel in flüssiger oder gasförmiger Form induziert wird.

Wenngleich im Rahmen der vorliegenden Erfindung prinzipiell eine rein thermisch oder rein chemisch induzierte Abscheidung des Katalysators durchgeführt werden kann, so stellt insbesondere eine Kombination dieser beiden Verfahrensschritte, die entweder gleichzeitig oder einander nachfolgend durchgeführt werden können, eine besonders effektive, da durch zwei verschiedene Wirkmechanismen unterstützte Art der chemischen Abscheidung dar.

Als Reduktionsmittel ist dabei jedwede chemische Verbindung bzw. Zusammensetzung anzusehen, mittels derer aus dem konkret verwendeten Katalysatorprecursor unter chemischer Reduktion der betreffende Katalysator abscheidbar ist. Geeignete flüssige Reduktionsmittel sind beispielsweise Lösungen, die KBH₄, NaBH₄, LiALH₄ und/oder N₂H₄ enthalten. Als gasförmiges Reduktionsmittel kann beispielsweise Wasserstoff, SO₂, CO, CH₄ und/oder NH₃ Verwendung finden.

Zu den Katalysatoren sei erwähnt, dass die vorliegende Erfindung im Besonderen auf die - in Brennstoffzellen bzw. sonstigen chemischen oder elektrochemischen Reaktoren - üblicherweise verwendeten Edelmetallkatalysatoren, wie z.B. Platin, Ruthenium, Rhodium, Gold, Silber, Kupfer oder Legierungen hieraus (z.B. Platinlegierungen wie beispielsweise PtRu), abzielt, womit es sich bei den betreffenden Katalysatorprecursoren bevorzugt um geeignete Edelmetallsalze handelt. Mögliche Beispiele hierfür werden später noch detailliert aufgezählt. Insoweit ist jedoch bereits an dieser Stelle erwähnenswert, dass zur Abscheidung einer als Katalysator fungierenden Edelmetalllegierung insbesondere eine - im entsprechenden Mischungsverhältnis stehende - Mischung aus Katalysatorprecursoren zu den verschiedenen Legierungsbestandteilen Verwendung finden kann.

Die Verwendung flüssiger oder gasförmiger Reduktionsmittel auf einer bereits erzeugten Elektrodenschicht trägt - unabhängig davon, ob der Katalysatorprecursor bereits in der Elektrodenschichtpaste vorhanden war oder erst später in gelöster Form auf die Elektrodenschicht aufgebracht wurde - dazu bei, dass die mit dem erfindungsgemäßen Verfahren bewirkte Katalysatorabscheidung ausschließlich in denjenigen relevanten Bereichen der Elektrodenschicht stattfindet, die später auch für die Prozessmedien der Brennstoffzelle (oder eines sonstigen chemischen oder elektro-chemischen Reaktors - zugänglich sind. Denn die chemisch induzierte Abscheidung findet nur in Bereichen statt, die für das Reduktionsmittel - und somit auch später für die Prozessmedien - zugänglich sind.

Besonders bevorzugt wird ein gasförmiges Reduktionsmittel, beispielsweise Wasserstoff, verwendet, da dieses in vorteilhafter Weise in kleinste Zwischenräume/Poren der Elektrodenschicht eindringen kann, wodurch eine weit verästelte Abscheidung des Katalysators auch auf den kleinsten, in der Elektrodenschicht vorhandenen Trägerpartikeln erfolgt, was die katalytisch aktive Oberfläche der erzeugten Katalysatorschicht nochmals verbessert. Dabei ist zu berücksichtigen, dass insbesondere im Falle einer erst nach Erzeugung der Elektrodenschicht erfolgenden Imprägnierung ohnehin sichergestellt ist, dass der Katalysatorprecursor nur dort vorhanden ist, wohin die katalysatorprecursorhaltige Lösung auch eindringen kann, was ein wichtiges Kriterium für die Effizienz des entsprechend chemisch induzierten Abscheidvorgangs im Hinblick auf eine möglichst gute Ausbeute an katalytisch aktiven Bereichen in der erfindungsgemäß hergestellten Katalysatorschicht ist.

Im Falle der Verwendung eines gasförmigen Reduktionsmittels (z.B. gasförmiger Wasserstoff) kann dieses am einfachsten appliziert werden, indem die Elektrodenschicht - in einer hierfür geeigneten Probenkammer - einer das gasförmige Reduktionsmittel enthaltenden Atmosphäre ausgesetzt wird, was eine besonders einfach und kostengünstig zu realisierende Art der Beaufschlagung der Elektrodenschicht mit einem wirksamen Reduktionsmittel darstellt. Eine solche Atmosphäre enthält - sofern sie nicht zu 100% aus dem gasförmigen Reduktionsmittel gebildet ist - neben dem gasförmigen Reduktionsmittel als weiteren Bestandteil bevorzugt ausschließlich ein inertes Gas, z.B. Stickstoff oder ein Edelgas. Der Anteil des Reduktionsmittels an einer solchen Atmosphäre beträgt bevorzugt wenigstens 20 Gew.-% oder wenigstens 30 Gew.-%.

Ferner ist einer nochmals bevorzugten Weiterbildung des erfindungsgemäßen Verfahrens vorgesehen, dass die Elektrodenschicht in Schritt (B) einer Temperatur von Raumtemperatur (= 20°C) bis 400°C oder mehr, besonders bevorzugt einer Temperatur von 50°C bis 250°C, und nochmals bevorzugt von 100°C bis 150°C, ausgesetzt wird, was mittels einer entsprechend beheizbaren Probenkammer möglich ist. Diese Temperaturbereiche erweisen sich sowohl im Hinblick auf die Effizienz hinsichtlich der gewünschten Reduktion des Katalysatorprecursors als auch im Hinblick auf ihre Unschädlichkeit für die üblicherweise in erfindungsgemäß hergestellten Elektrodenschichten vorhandenen Materialien als zweckmäßig. Die insoweit - ohne Schädigung der Elektrodenschicht - mögliche Maximaltemperatur ergibt sich aus der Temperaturstabilität der Elektrodenschicht bzw. der in ihr vorhandenen Komponenten. Im Falle nafionhaltiger Elektrodenschichten sollten z.B. Temperaturen von größer als 150°C vermieden werden, um eine Zersetzung des Nafions zu vermeiden, während in teflonhaltigen Elektrodenschichten für HT-PEM-Brennstoffzellen Temperaturen von deutlich über 400°C ohne Schädigung der Elektrodenschicht möglich sind.

Es hat sich gezeigt, dass im Rahmen eines erfindungsgemäßen Verfahrens mit gleichzeitiger Temperatur- und Reduktionsmittelbeaufschlagung der Elektrodenschicht bereits in unerwartbar kurzen Zeitspannen eine hinreichende und effiziente Katalysatorbelegung der in der Elektrodenschicht vorhandenen Trägerpartikel realisierbar ist. Somit kann die Elektrodenschicht in Schritt (B) in vorteilhafter Weise lediglich für einen Zeitraum von etwa 1 bis 30 Minuten, insbesondere für einen Zeitraum von etwa 5 bis 15 Minuten, gleichzeitig einer Atmosphäre, die ein gasförmiges Reduktionsmittel enthält, und einer Temperatur im Bereich von 100°C bis 150°C ausgesetzt werden, was insbesondere für die industrielle und kostengünstige Fertigung von entsprechenden Katalysatorschichten von großem Vorteil ist.

Die in Schritt (A) des erfindungsgemäßen Verfahrens erzeugte Elektrodenschicht wird in bevorzugter Weise aus einer Elektrodenschichtpaste erzeugt, in der die Trägerpartikel mit Lösungsmittel und/oder wenigstens einer weiteren Komponente vermischt sind.

Als Trägerpartikel eignen sich insbesondere Kohlenstoffpartikel, insbesondere in Form von (Industrie-) Ruß, der z.B. pulverförmig bzw. pulverisiert sein kann. Ebenfalls geeignet sind insoweit jedoch auch Trägerpartikel aus anderen Materialien, z.B aus Graphit, graphitisiertem Ruß, TiO₂, Wolframcarbid oder Titancarbid. Ferner können diese beispielsweise auch in Form von Kohlenstoff-Nanotubes, TiO₂-Nanotubes, carbonisierten TiO2-Nanotubes, etc. vorliegen.

Besonders vorteilhaft ist es ferner, wenn die Elektrodenschichtpaste ein Elektrolytmaterial als weitere Komponente, z.B. in Form von Nafion®, einer Nafionlösung oder phosphorsäuredotiertem PBI, etc. aufweist, wodurch der Elektrodenschicht auch eine gewisse Protonenleitfähigkeit (ionische Leitfähigkeit) verliehen wird. Auch oberflächenverändernde Substanzen, wie z.B. Teflon, oder chemische Binder können vorteilhaft einer geeigneten Elektrodenschichtpaste beigemengt sein.

Weiterhin kann vorteilhaft vorgesehen sein, dass die Elektrodenschicht als strukturierte Schicht erzeugt wird, indem die Trägerpartikel hinsichtlich wenigstens einer Partikeleigenschaft wie beispielsweise Material, Form, Größe oder Oberflächenstruktur inhomogen zusammengestellt sind oder eine Strukturierung der Elektrodenschicht durch den Einsatz von Templaten oder durch andere strukturgebende Verfahren, wie z.B. Nanoimprint-Verfahren oder dergleichen, erfolgt.

Als Katalysatorprecursor finden in einem Verfahren nach der vorliegenden Erfindung zur Abscheidung eines Pt-, Ru- oder PtRu-Katalysators in besonders vorteilhafter Weise H₂PtCl₆, Pt(NO₂)₃, (NH₄)₂PtCl₆, Na₂PtCl₆, K₂PtCl₆ H₂Pt(OH)₆, PtO₂, PtCl₄, H₂Pt(SO₄)₂, [Pt(NH₃)₃NO₂]NO₂, RuCl₃, (NH₄)₃RuCl₆ oder H₃RuCl₆ oder bimetallische Precursoren, wie PtRu₅C(CO)₁₆ oder Pt₂Ru₄(CO)₁₈, oder Mischungen aus den genannten Katalysatorprecursoren Verwendung. Zur Abscheidung eines Gold-Katalysators kann z.B. auf HAuCl₄, (NH₄)₃, Au(SO₃)₂ und/oder K₃Au(SO₃)₂ als Katalysatorprecursor zurückgegriffen werden. Für eine Rhodiumabscheidung kann Rh₂(SO₄)₃, RhCl₃ und/oder Na₃RhCl₆ als Precursor Verwendung finden. Zur Silberabscheidung kann z.B. auf Ag₂SO₄ bzw. KAg(CN)₂ und zur Kupferabscheidung auf CuSO₄ zurückgegriffen werden. Diese Liste ist ersichtlich nicht abschließend, da zur Durchführung des erfindungsgemäßen Verfahrens auch weitere Katalysatorprecursoren, insbesondere für andere möglicherweise gewünschte Edelmetalle oder Metalle (wie z.B. Cobalt, Nickel, Wolfram, Selen, etc.) und/oder (Edel-)Metalllegierungen, insbesondere in Form von Salzen der betreffenden (Edel-)Metalle, ohne Abweichung von der erfindungsgemäßen technischen Lehre Verwendung finden können.

Als Substrat, welches als Untergrund für die zu erzeugende Elektrodenschicht dient, kann in vorteilhafter Weise insbesondere eine Gasdiffusionsschicht für eine Brennstoffzelle, eine Polymerelektrolytmembran oder ein sonstiges folien- oder gewebeartiges Substrat Verwendung finden. Insbesondere kann unter Anwendung des erfindungsgemäßen Verfahrens zunächst mit Verfahrensschritt (A) eine katalysatorprecursorfreie Elektrodenschicht hergestellt werden, die einfach zu handhaben und ohne Qualitätseinbußen auch über einen längeren Zeitraum gelagert werden kann. Der erfindungsgemäße Verfahrensschritt (B) kann somit in diesem Fall auch mit deutlichem Abstand zum Verfahrensschritt (A) durchgeführt werden, wozu die erzeugte Elektrodenschicht zuvor jedoch noch mit einer katalysatorprecursorhaltigen Lösung imprägniert werden muss. Diese Imprägnierung kann auf verschiedenste Art und Weise, z.B. durch Auftropfen oder Aufsprühen der Lösung, erfolgen.

Nachfolgend sei ein anschauliches Ausführungsbeispiel eines erfindungsgemäßen Verfahrens anhand der Erzeugung einer Katalysatorschicht für die Kathodenseite einer Direktmethanolbrennstoffzelle, bei der reines Platin als Katalysator verwendet wird, erläutert.

Als Substrat dient insoweit eine Gasdiffusionsschicht (gas diffusion layer, GDL) üblicher Art. Auf dieses wird eine aus feinpulvrigem Industrieruß und Nafion® zusammengemischte Paste (z.B. bestehend aus 50 Gew.-% (Gewichtsprozent; wt.%) Ruß und 50 Gew.-% Nafion) mittels eines Rakelprozesses in einer für Elektrodenschichten üblichen Schichtdicke (z.B. 5-100 *µ*m) aufgebracht. Die in der Elektrodenschichtpaste bzw. der hieraus erzeugten Elektrodenschicht vorhandenen Rußteilchen dienen somit als Trägerpartikel für das in einem späteren Verfahrensschritt darauf abzuscheidende Platin.

Die Elektrodenschicht, die entweder noch feucht oder bereits trocken sein kann, wird sodann durch kontrolliertes Auftropfen der benötigten Menge einer alkoholischen - und somit benetzenden - Lösung (z.B. auf Isopropanol-Basis), welche H₂PtCl₆ als Platinprecursor in einer gewünschten Konzentration enthält, imprägniert. Dabei enthält die Lösung z.B. 15 Gew.-% reines Platin, also einen Precursorgehalt, der der genannten menge reinen Platins entspricht. Unmittelbar nach der Imprägnierung der Elektrodenschicht mit der katalysatorhaltigen Precursorlösung wird die noch feuchte Elektrodenschicht in einer geeigneten Probenkammer für eine Dauer von 10 Minuten in wasserstoffhaltiger Atmosphäre auf 110° C erwärmt. Die Atmosphäre besteht vorteilhaft aus 30-100% Wasserstoff und einem Inertgas, wie z.B. Stickstoff. Dabei wandelt sich der Platinprecursor in fein verteiltes metallisches Platin um, welches nun auf dem Industrieruß der Elektrodenschicht abgeschieden wird, d.h. dann dort fixiert ist.

Die solchermaßen erhaltene Gasdiffusionsschicht mit einer darauf befindlichen katalysatorhaltigen Elektrodenschicht kann nun weiterverarbeitet werden, indem sie z.B. in üblicher Weise zusammen mit einer zweiten GDL, auf welcher die anodenseitige, z.B. PtRu als Katalysator enthaltende, Elektrodenschicht erzeugt ist, und einer - zwischen den beiden Katalysatorschichten anzuordnenden - Polymerelektrolytmembran zur Bildung einer Membran-Elektroden-Einheit verpresst wird.

## Patentansprüche

1. Verfahren zur Erzeugung einer katalysatorhaltigen Elektrodenschicht auf einem Substrat umfassend die folgenden Schritte:
(A) Erzeugen einer Elektrodenschicht auf dem Substrat, wobei die Elektrodenschicht Trägerpartikel für den darauf abzuscheidenden Katalysator enthält,
und nachfolgend:
(B) Abscheiden des Katalysators auf zumindest einem Teil der in der gemäß Schritt (A) erzeugten Elektrodenschicht vorhandenen Trägerpartikel unter Zersetzung eines in der Elektrodenschicht nicht nur oberflächlich vorhandenen Katalysatorprecursors ohne externes Anlegen eines elektrischen Stroms, einer elektrischen Spannung oder eines elektrisches Feldes,
wobei die Elektrodenschicht erst nach ihrer Erzeugung gemäß Schritt (A) mit einer den Katalysatorprecursor enthaltenden Lösung durch Auftropfen oder Aufsprühen imprägniert wird, wobei die Imprägnierung der Elektrodenschicht über einen Zeitraum zwischen 1 Sekunde und 10 Minuten erfolgt,
wobei zwischen dem Ende der Imprägnierung und dem Beginn der Abscheidung des Katalysators gemäß Schritt (B) nicht mehr als 20 Minuten vergehen, wobei das Abscheiden des Katalysators gemäß Schritt (B) unter gleichzeitiger Temperatur- und Reduktionsmittelbeaufschlagung der Elektrodenschicht in einem Zeitraum von etwa 1 bis 30 Minuten erfolgt, und
wobei kein Waschschritt, der einen Austrag des Katalysators aus der Schicht bewirken könnte, erfolgt.

2. Verfahren nach Anspruch 1,
**dadurch gekennzeichnet,**
**dass** die Elektrodenschicht mit der den Katalysatorprecursor enthaltenden Lösung gezielt inhomogen imprägniert wird.

3. Verfahren nach einem der vorangehenden Ansprüche,
**dadurch gekennzeichnet,**
**dass** das Abscheiden des Katalysators gemäß Schritt (B) durch ein in Kontakt mit der Elektrodenschicht stehendes Reduktionsmittel in flüssiger oder gasförmiger Form induziert wird.

4. Verfahren nach Anspruch 3,
**dadurch gekennzeichnet,**
**dass** die Elektrodenschicht in Schritt (B) einer das gasförmige Reduktionsmittel enthaltenden Atmosphäre ausgesetzt wird.

5. Verfahren nach Anspruch 3 oder Anspruch 4,
**dadurch gekennzeichnet,**
**dass** die Elektrodenschicht in Schritt (B) einer Temperatur von Raumtemperatur bis 400°C oder mehr, oder einer Temperatur zwischen 50°C und 250°C oder einer Temperatur von 100°C bis 150°C ausgesetzt wird.

6. Verfahren nach Anspruch 7,
**dadurch gekennzeichnet,**
**dass** die Elektrodenschicht in Schritt (B) für einen Zeitraum von etwa 1 bis 30 Minuten oder für einen Zeitraum von etwa 5 bis 15 Minuten, gleichzeitig einer Atmosphäre, die ein gasförmiges Reduktionsmittel enthält, und einer Temperatur im Bereich von 100°C bis 150°C ausgesetzt wird.

7. Verfahren nach einem der vorangehenden Ansprüche,
**dadurch gekennzeichnet,**
**dass** die Elektrodenschicht aus einer Elektrodenschichtpaste erzeugt wird, in der die Trägerpartikel mit Lösungsmittel und/oder wenigstens einer weiteren Komponente vermischt sind.

8. Verfahren nach einem der vorangehenden Ansprüche,
**dadurch gekennzeichnet,**
**dass** die Elektrodenschicht als strukturierte Schicht erzeugt wird, indem die Trägerpartikel hinsichtlich wenigstens einer Partikeleigenschaft wie beispielsweise Material, Form, Größe oder Oberflächenstruktur inhomogen zusammengestellt sind oder eine Strukturierung der Elektrodenschicht durch den Einsatz von Templaten oder durch andere strukturgebende Verfahren erfolgt.

9. Verfahren nach einem der vorangehenden Ansprüche,
**dadurch gekennzeichnet,**
**dass** der Katalysator ein Edelmetall oder eine Edelmetalllegierung, insbesondere Platin oder eine Platinlegierung, ist.

10. Verfahren nach Anspruch 9,
**dadurch gekennzeichnet,**
**dass** als Katalysatorprecursor H₂PtCl₆, Pt(NO₂)₃, (NH₄)₂PtCl₆, Na₂PtCl₆, K₂PtCl₆ H₂Pt(OH)₆, PtO₂, PtCl₄, H₂Pt(SO₄)₂, [Pt(NH₃)₃NO₂]NO₂, RuCl₃, (NH₄)₃RuCl₆, H₃RuCl₆, HAuCl₄, (NH₄)₃Au(SO₃)₂, K₃Au(SO₃)₂, Rh₂(SO₄)₃, RhCl₃, Na₃RhCl₆, Ag₂SO₄, KAg(CN)₂ oder CuSO₄ oder bimetallische Precursoren, wie PtRu₅C(CO)₁₆ oder Pt₂Ru₄(CO)₁₈,
oder Mischungen aus den genannten Katalysatorprecursoren Verwendung findet.

11. Verfahren nach einem der vorangehenden Ansprüche,
**dadurch gekennzeichnet,**
**dass** als Substrat eine Gasdiffusionsschicht für eine Brennstoffzelle, eine Polymerelektrolytmembran oder ein sonstiges folien- oder gewebeartiges Substrat Verwendung findet.

12. Verfahren nach einem der vorangehenden Ansprüche,
**dadurch gekennzeichnet,**
**dass** es sich um ein Verfahren zur Erzeugung einer Katalysatorschicht für Brennstoffzellen oder sonstige chemische oder elektrochemische Reaktoren handelt.

## Claims

1. A method for producing an electrode layer containing a catalyst on a substrate comprising the following steps:
(A) production of an electrode layer on the substrate, wherein the electrode layer contains carrier particles for the catalyst to be separated thereon,
and subsequently:
(B) separation of the catalyst on at least part of the carrier particles present in the electrode layer produced according to step (A) with decomposition of a catalyst precursor present not only superficially in the electrode layer without external application of an electrical current, an electrical voltage or an electrical field,
wherein the electrode layer is impregnated by dropping on or spraying on only following its production according to step (A),
wherein impregnation of the electrode layer takes place over a period of between 1 second and 10 minutes,
wherein no more than 20 minutes elapse between the end of the impregnation and the beginning of the separation of the catalyst according to step (B),
wherein separation of the catalyst according to step (B) takes place with simultaneous exposure of the electrode layer to temperature and a reducing agent over a period of roughly 1 to 30 minutes and
wherein there is no washing step which could cause seepage of the catalyst from the layer.

2. The method according to claim 1,
**characterized in that**
the electrode layer is impregnated in a selectively inhomogeneous manner with the solution containing the catalyst precursor.

3. The method according to one of the preceding claims, **characterized in that**
the separation of the catalyst according to step (B) is induced by a reducing agent in liquid or gas form which is in contact with the electrode layer.

4. The method according to claim 3,
**characterized in that**
the electrode layer in step (B) is exposed to an atmosphere containing the gaseous reducing agent.

5. The method according to claim 3 or 4,
**characterized in that**
the electrode layer in step (B) is exposed to a temperature from room temperature to 400 °C or more, or to a temperature of between 50 °C and 250 °C or to a temperature from 100 °C to 150 °C.

6. The method according to claim 7,
**characterized in that**
the electrode layer in step (B) is simultaneously exposed for a period of roughly 1 to 30 minutes or for a period of roughly 5 to 15 minutes to an atmosphere which contains a gaseous reducing agent and to a temperature in the region of 100 °C to 150 °C.

7. The method according to one of the preceding claims,
**characterized in that**
the electrode layer is produced from an electrode layer paste in which the carrier particles are mixed with a solvent and/or at least one further component.

8. The method according to one of the preceding claims,
**characterized in that**
the electrode layer is produced as a structured layer, **in that** the carrier particles are assembled inhomogeneously in relation to at least one particle property such as, for example, material, shape, size or surface structure or a structuring of the electrode layer through the use of templates or through different structuring methods takes place.

9. The method according to one of the preceding claims,
**characterized in that**
the catalyst is a precious metal or a precious metal alloy, in particular platinum or a platinum alloy.

10. The method according to claim 9,
**characterized in that**
H₂PtCl₆, Pt(NO₂)₃, (NH₄)₂PtCl₆, Na₂PtCl₆, K₂PtCl₆ H₂Pt(OH)₆, PtO₂, PtCl₄, H₂Pt(SO₄)₂, [Pt(NH₃)₃NO₂]NO₂, RuCl₃, (NH₄)₃RuCl₆, H₃RuCl₆, HAuCl₄, (NH₄)₃Au(SO₃)₂, K₃Au(SO₃)₂, Rh₂(SO₄)₃, RhCl₃, Na₃RhCl₆, Ag₂SO₄, KAg(CN)₂ or CuSO₄ or
bimetallic precursors such as PtRu₅C(CO)₁₆ or Pt₂Ru₄(CO)₁₈
or mixtures of the aforementioned catalyst precursors are used as catalyst precursors.

11. The method according to one of the preceding claims,
**characterized in that**
a gas diffusion layer for a fuel cell, a polymer electrolyte membrane or another film-like or fabriclike substrate is used as the substrate.

12. The method according to one of the preceding claims,
**characterized in that**
it is a method for producing a catalyst layer for fuel cells or other chemical or electrochemical reactors.

## Revendications

1. Procédé, destiné à créer une couche d'électrode contenant un catalyseur sur un substrat, comprenant les étapes suivantes, consistant à :
A) créer une couche d'électrode sur le substrat, la couche d'électrode contenant des particules porteuses pour le catalyseur qui doit y être déposé,
et ensuite :
(B) déposer le catalyseur sur au moins une partie des particules porteuses présentes sur la couche d'électrode créée selon l'étape (A), en décomposant un précurseur de catalyseur qui est présent, pas seulement en surface dans la couche d'électrode, sans application externe d'un courant électrique, d'une tension électrique ou d'un champ électrique,
la couche d'électrode n'étant imprégnée d'une solution contenant le précurseur de catalyseur par goutte à goutte ou par vaporisation qu'après sa création selon l'étape (A),
l'imprégnation de la couche d'électrode s'effectuant sur une période comprise entre 1 seconde et 10 minutes,
alors qu'entre la fin de l'imprégnation et le début du dépôt du catalyseur selon (B), il ne se passe pas plus de 20 minutes,
le dépôt du catalyseur selon l'étape (B) s'effectuant sous exposition simultanée de la couche d'électrode à une température ou à un agent réducteur dans une période comprise environ entre 1 et 30 minutes et aucune étape de lavage, susceptible de provoquer une évacuation du catalyseur de la couche n'ayant lieu.

2. Procédé selon la revendication 1,
**caractérisé en ce**
**qu'**on imprègne de manière non homogène la couche d'électrode avec la solution contenant le précurseur de catalyseur.

3. Procédé selon l'une quelconque des revendications précédentes,
**caractérisé en ce**
**qu'**on induit le dépôt du catalyseur selon l'étape (B) par un agent réducteur qui est en contact avec la couche d'électrode sous forme liquide ou gazeuse.

4. Procédé selon la revendication 3,
**caractérisé en ce que**
dans l'étape (B), on expose la couche d'électrode à une atmosphère contenant l'agent réducteur gazeux.

5. Procédé selon la revendication 3 ou la revendication 4,
**caractérisé en ce que**
dans l'étape (B), on expose la couche d'électrode à une température comprise entre la température ambiante et 400 °C ou plus, ou à une température comprise entre 50 °C et 250 °C ou à une température comprise entre 100 °C et 150 °C.

6. Procédé selon la revendication 7,
**caractérisé en ce que**
dans l'étape (B), on expose la couche d'électrode pour une période comprise entre environ 1 et 30 minutes ou pour une période comprise entre environ 5 et 15 minutes, simultanément à une atmosphère contenant un agent réducteur gazeux et à une température de l'ordre de 100 °C à 150 °C.

7. Procédé selon l'une quelconque des revendications précédentes,
**caractérisé en ce**
**qu'**on créé la couche d'électrode à partir d'une couche de pâte à électrode, dans laquelle les particules porteuses sont mélangées à un solvant et/ou au moins à un composant supplémentaire.

8. Procédé selon l'une quelconque des revendications précédentes,
**caractérisé en ce**
**qu'**on créé la couche d'électrode sous la forme d'une couche structurée, **en ce que** les particules porteuses sont rassemblées de manière non homogène au niveau d'au moins une propriété de particules, comme par exemple la matière, la forme, la dimension ou la structure superficielle ou **en ce qu'**on procède à une structuration de la couche d'électrode par l'utilisation de modèles ou par d'autres procédés structurants.

9. Procédé selon l'une quelconque des revendications précédentes,
**caractérisé en ce que**
le catalyseur est un métal précieux ou un alliage de métaux précieux, notamment du platine ou un alliage de platine.

10. Procédé selon la revendication 9,
**caractérisé en ce**
**qu'**on utilise en tant que précurseur de catalyseur du H₂PtCl₆, du Pt(N0₂)₃, du (NH₄)₂PtCl₆, du Na₂PtCl₆, du K₂PtCl₆ du H₂Pt(OH)₆, du PtO₂, du PtCl₄, du H₂Pt(SO₄}₂, du [Pt(NH₃}NO₂] du NO₂, du RuCl₃, du (NH₄} du ₃RuCl₆, du H₃RuCl₆, du HAuCl₄, du (NH₄)₃AU(SO₃)₂, K3AU(SO₃)₂, du Rh₂(SO₄)₃, RhC₁₃, du Na₃RhC1₆, de l'Ag₂SO₄, du KAg(CN)₂ ou du CuSO₄
ou des précurseurs bimétalliques, comme le PtRu₅C(CO)₁₆ ou du Pt₂RU₄ (CO)₁₈,
ou des mélanges des précurseurs de catalyseur cités.

11. Procédé selon l'une quelconque des revendications précédentes,
**caractérisé en ce**
**qu'**on utilise en tant que substrat une couche de diffusion de gaz pour une pile à combustible, une membrane polymère d'électrolyte ou un autre substrat de type film ou tissu.

12. Procédé selon l'une quelconque des revendications précédentes,
**caractérisé en ce**
**qu'**il s'agit d'un procédé destiné à créer une couche de catalyseur pour des piles à combustible ou d'autres réacteurs chimiques ou électrochimiques.
